# EUROPEAN PATENT APPLICATION

(11) **EP 4 553 922 A1**
(43) Date of publication of application: **14.05.2025**
(21) Application number: 24209004.1
(22) Date of filing: 25.10.2024
(51) Int. Cl.: H01M 4/36, H01M 4/1391, H01M 4/525

(54) **POSITIVE ELECTRODE FOR RECHARGEABLE LITHIUM BATTERY AND RECHARGEABLE LITHIUM BATTERY INCLUDING THE SAME**

(30) Priority: 31.10.2023 KR 20230148300
(71) Applicant: SAMSUNG SDI CO., LTD., Yongin-si, Gyeonggi-do 17084 (KR)
(72) Inventor: KIM, Jinhwa, 17084 Yongin-si (KR); KIM, Minhan, 17084 Yongin-si (KR); LEE, Soonrewl, 17084 Yongin-si (KR); SEOG, Jihyun, 17084 Yongin-si (KR)
(74) Representative: Marks & Clerk LLP

(57) **Abstract**

Disclosed are a positive electrode for a rechargeable lithium battery, and rechargeable lithium battery including the same. The positive electrode for a rechargeable lithium battery includes a positive electrode current collector, and a positive electrode active material layer on the positive electrode current collector, wherein the positive electrode active material layer includes a first positive electrode active material and a second positive electrode active material, the first positive electrode active material includes lithium nickel-based composite oxide and is in the form of secondary particles composed of a plurality of primary particles, and an average particle diameter (D₅₀) of the secondary particles is about 9 µm to about 25 µm, the second positive electrode active material includes lithium nickel-based composite oxide, is in the form of single particles, and an average particle diameter (D₅₀) of the single particles is about 0.5 µm to about 5 µm, in the positive electrode active material layer, a lower layer, which is an area of up to about 10 length% in a thickness direction from a surface in contact with the current collector, includes about 5 wt% to about 30 wt% of the second positive electrode active material based on a total of 100 wt% of the first and second positive electrode active materials, and an upper layer, which is an area of the positive electrode active material layer extending up to about 10 length% in a thickness direction from a surface opposite to the surface in contact with the current collector, includes about 31 wt% to about 60 wt% of the second positive electrode active material based on a total of 100 wt% of the first and second positive electrode active materials.

## Description

### BACKGROUND

### 1. Field

Embodiments of the present disclosure described herein are related to positive electrodes for rechargeable lithium batteries, rechargeable lithium batteries including the same, and methods for manufacturing the positive electrode are disclosed.

### 2. Description of the Related Art

A portable information device such as a cell phone, a laptop, smart phone, and/or the like or an electric vehicle has used a rechargeable lithium battery having relatively high energy density and easy portability as a driving power source. Recently, research has explored or conducted using a rechargeable lithium battery with high energy density as a driving power source for hybrid or electric vehicles or as a power storage power source for energy storage systems or power walls.

These rechargeable lithium batteries require or desire high electrode plate density (electrode active material density), but there may be a problem of cracks in active materials that may be induced during compression process to achieve high electrode plate density, thereby impairing electrochemical properties. Accordingly, research to control cracks caused in the compression process is still needed or desired.

### SUMMARY

Aspects according to one or more embodiments are directed toward a positive electrode for rechargeable lithium batteries to prevent or reduce deterioration of rechargeable lithium batteries and achieve long cycle-life.

Aspects according to one or more embodiments are directed toward a positive electrode for a rechargeable lithium battery that prevents or reduces cracks generated during the compression process and delays deterioration behavior during the cycle-life, enabling a long cycle-life.

Additional aspects will be set forth in part in the description which follows, and in part, will be apparent from the description, or may be learned by practice of the presented embodiments of the present disclosure.

According to one or more embodiments, a positive electrode for a rechargeable lithium battery includes a positive electrode current collector, and a positive electrode active material layer on the positive electrode current collector, wherein the positive electrode active material layer includes a first positive electrode active material and a second positive electrode active material, the first positive electrode active material includes lithium nickel-based composite oxide and includes (e.g., is in the form of) secondary particles (e.g., each) composed of (e.g., including or being) a plurality of primary particles, and an average particle diameter (D₅₀) of the secondary particles is 9 µm to 25 µm, the second positive electrode active material includes lithium nickel-based composite oxide and includes (e.g., is in the form of) single particles (e.g., each being a monolithic particle), and an average particle diameter (D₅₀) of the single particles is 0.5 µm to 5 µm, in the positive electrode active material layer, a lower layer, which is an area of up to 10 length% in a thickness direction from a surface in contact with the current collector, includes 5 wt% to 30 wt% of the second positive electrode active material based on a total of 100 wt% of the first and second positive electrode active materials, and an upper layer, which is an area of the positive electrode active material layer extending up to 10 length% in a thickness direction from a surface opposite to the surface in contact with the current collector, includes 31 wt% to 60 wt% of the second positive electrode active material based on a total of 100 wt% of the first and second positive electrode active materials.

According to one or more embodiments, a method of manufacturing a positive electrode for a rechargeable lithium battery includes preparing a first layer composition having a content (e.g., amount) of 5 wt% to 30 wt% of the second positive electrode active material based on a total of 100 wt% of the first and second positive electrode active materials; preparing a second layer composition having a content (e.g., amount) of 31 wt% to 60 wt% of the second positive electrode active material based on a total of 100 wt% of the first and second positive electrode active materials; loading the first layer composition and the second layer composition into a dual slot die coater, and concurrently (e.g., simultaneously) coating the first layer so that the first layer is located on the current collector and the second layer is located on the first layer; and drying and then compressing; wherein the first positive electrode active material includes a lithium nickel-based composite oxide and includes (e.g., is in the form of) secondary particles (e.g., each) composed of (e.g., including or being) a plurality of primary particles, and an average particle diameter (D₅₀) of the secondary particles is 9 µm to 25 µm, and the second positive electrode active material includes a lithium nickel-based composite oxide and includes (e.g., is in the form of) single particles (e.g., each being a monolithic particle), and an average particle diameter (D₅₀) of the single particles is 0.5 µm to 5 µm.

According to one or more embodiments, a rechargeable lithium battery includes the positive electrode; a negative electrode; and an electrolyte.

At least some of the above and other features of the invention are set out in the claims.

### BRIEF DESCRIPTION OF THE DRAWINGS

FIGS. 1-4 are schematic diagrams each showing a rechargeable lithium battery according to one or more embodiments.
FIG. 5 is an image of the cross-section of the positive electrode of Comparative Example 1.

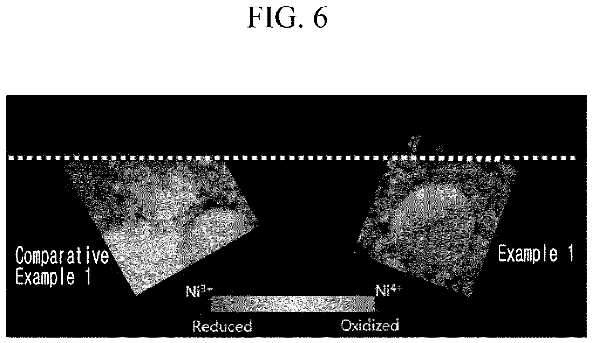

The left side of FIG. 6 is an enlarged image of the upper layer of the cross-section of the positive electrode of Comparative Example 1, and the right side of FIG. 6 is an enlarged image of the upper layer of the cross-section of the positive electrode of Example 1.

### DETAILED DESCRIPTION

Hereinafter, specific embodiments will be described in more detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, the term "and/or" includes any and all combinations of one or more of the associated listed items. As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

As used herein, "combination thereof" refers to a mixture, a stack, a composite, a copolymer, an alloy, a blend, a reaction product, and/or the like of the constituents.

Herein, it should be understood that terms such as "comprises," "includes," or "have" are intended to designate the presence of an embodied feature, number, step (e.g., act or task), element, and/or a (e.g., any suitable) combination thereof, but it does not preclude the possibility of the presence or addition of one or more other features, numbers, steps (e.g., act or task), elements, and/or a (e.g., any suitable) combination thereof.

In the drawings, the thickness of layers, films, panels, regions, and/or the like, are exaggerated for clarity and like reference numerals designate like elements throughout, and duplicative descriptions thereof may not be provided in the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

"Layer" herein includes not only a shape formed on the whole surface if (e.g., when) viewed from a plan view, but also a shape formed on a partial surface.

The average particle diameter may be measured by a method suitable to those skilled in the art, for example, by a particle size analyzer, or by a transmission electron microscope image or a scanning electron microscope image. In one or more embodiments, it is possible to obtain an average particle diameter value by measuring using a dynamic light scattering method, performing data analysis, counting the number of particles for each particle size range, and calculating from this. Unless otherwise defined, the average particle diameter may refer to the diameter (D₅₀) of particles having a cumulative volume of 50 volume% in the particle size distribution. As used herein, if (e.g., when) a definition is not otherwise provided, the average particle diameter refers to a diameter (D₅₀) of particles having a cumulative volume of 50 volume% in the particle size distribution that is obtained by measuring the size (diameter or major axis length) of 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

As utilized herein, the term "substantially" and similar terms are utilized as terms of approximation and not as terms of degree, and are intended to account for the inherent deviations in measured or calculated values that would be recognized by those of ordinary skill in the art. Also, the term "about" and similar terms, when utilized herein in connection with a numerical value or a numerical range, are inclusive of the stated value and a value within an acceptable range of deviation for the particular value as determined by one of ordinary skill in the art, considering the measurement in question and the error associated with measurement of the particular quantity (e.g., the limitations of the measurement system). For example, "about" may refer to within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Hereinbelow, a positive electrode for a rechargeable lithium battery, a rechargeable lithium battery including the positive electrode, and a method of preparing a positive electrode for a rechargeable lithium battery according to one or more embodiments will be described in greater detail.

### Positive Electrode

In one or more embodiments, a positive electrode for a rechargeable lithium battery includes a positive electrode current collector, and a positive electrode active material layer on the positive electrode current collector, wherein the positive electrode active material layer includes a first positive electrode active material and a second positive electrode active material, the first positive electrode active material includes lithium nickel-based composite oxide and includes (e.g., is in the form of) secondary particles (e.g., each) composed of (e.g., including or being) a plurality of primary particles, and an average particle diameter (D₅₀) of the secondary particles is 9 µm to 25 µm, the second positive electrode active material includes lithium nickel-based composite oxide and includes (e.g., is in the form of) single particles (e.g., each being a monolithic particle), and an average particle diameter (D₅₀) of the single particles is 0.5 µm to 5 µm, in the positive electrode active material layer, a lower layer, which is an area of up to 10 length% in a thickness direction from a surface in contact with the current collector, includes 5 wt% to 30 wt% of the second positive electrode active material based on a total of 100 wt% of the first and second positive electrode active materials, and an upper layer, which is an area of the positive electrode active material layer extending up to 10 length% in a thickness direction from a surface opposite to the surface in contact with the current collector, includes 31 wt% to 60 wt% of the second positive electrode active material based on a total of 100 wt% of the first and second positive electrode active materials.

In the positive electrode including the lithium nickel-based positive electrode active material, a design of mixing the large particles including (e.g., being in the form of) secondary particles and the small particles including (e.g., being in the form of) single particles has been proposed to minimize or reduce capacity and energy density and realize long cycle-life characteristics. In general, positive electrodes are generally manufactured by applying a positive electrode composition including a positive electrode active material on a current collector and then, compressing them. However, the positive electrode including the large particles in the form of secondary particles and the small particles in the form of single particles may have a problem that the large particles in the form of secondary particles are broken or cracked or have a damage on the surface in the upper layer in contact with a compressing roll or a compressing plate during the compression. Accordingly, as batteries are repeatedly charged and discharged, the large particles in the upper layer are deteriorated at an accelerated rate, which may lead to a problem of deteriorating cycle-life characteristics. Accordingly, one or more embodiments propose a design of increasing a content (e.g., amount) of the small particles in the form of single particles to a set or predetermined ratio, while decreasing that of the large particles in the form of secondary particles to a set or predetermined ratio, in the upper layer to effectively suppress or reduce the problem that the large particles are broken in the upper layer during the compression process and thereby, improve cycle-life characteristics and concurrently (e.g., simultaneously), maintain high capacity and energy density.

Furthermore, in general, the thicker the positive electrode active material layer, the higher the capacity, but there is a problem that an impregnation degree of an electrolyte solution is low or movement of lithium ions is not sufficient in a lower layer of the positive electrode active material layer close to the current collector. In contrast, the positive electrode for a rechargeable lithium battery according to one or more embodiments may not only accomplish high capacity but also includes the single particles with an average particle diameter of 0.5 µm to 5 µm in a larger amount in the upper layer close to the surface of the positive electrode active material layer than in the lower layer close to the current collector of the positive electrode active material layer to increase porosity of the lower layer, that is, a lower portion of the electrode and increase the impregnation degree of the electrolyte solution and thereby, smoothen the movement of lithium ions. For example, as a substantially uniform reaction of the upper and lower portions of the electrode plate is secured, cycle-life characteristics of the rechargeable lithium battery including the positive electrode may be improved. In addition, because the lithium ions may smoothly move to the lower portion of the electrode plate, an electrochemical reaction may more actively occur, improving rate capability, and/or the like of the rechargeable lithium battery.

### Positive Electrode Active Material Layer

The positive electrode active material layer includes a first positive electrode active material including a lithium nickel-based composite oxide and a second positive electrode active material including a lithium nickel-based composite oxide. Additionally, the positive electrode active material layer may further include other types (kinds) of positive electrode active materials, and may optionally further include a binder and/or a conductive material. The first positive electrode active material includes (e.g., be in the form of) secondary particles composed of a plurality of primary particles, and in this case, the average particle diameter (D₅₀) of the secondary particles is 9 µm to 25 µm, for example, 9 µm to 23 µm, 9 µm to 22 µm, 10 µm to 20 µm, or 12 µm to 18 µm. The first positive electrode active material may be expressed as a large particle. When the particle size of the secondary particles satisfies the above range, high capacity and high energy density may be achieved, the electrolyte is well impregnated into the lower layer, which is the lower part of the electrode plate, and a movement of lithium ions can be actively maintained, thereby resolving an uneven reaction between the upper and lower layers of the electrode plate and improving cycle-life and rate capability of the battery. Herein, the average particle diameter (D₅₀) of the secondary particles refers to a diameter of particles having a cumulative volume of 50 volume% in the particle size distribution that is obtained by measuring the size (diameter or major axis length) of 20 particles at random in a scanning electron microscope image.

The second positive electrode active material includes (e.g., be in the form of) a single particle, and an average particle diameter (D₅₀) of the single particle is 0.5 µm to 5 µm, for example, 0.7 µm to 5 µm, 0.8 µm to 5 µm, 1 µm to 5 µm, or 1.5 µm to 4 µm. The second positive electrode active material may be expressed as a small particle. When the particle size of the single particle satisfies the above range, the energy density of the positive electrode may be maximized or increased, the electrolyte solution penetrates well to the bottom of the electrode plates and can help lithium ions move smoothly, achieving high capacity and improving cycle-life and rate capability of the battery at the same time. Herein, the average particle diameter (D₅₀) of the single particle refers to a diameter of particles having a cumulative volume of 50 volume% in the particle size distribution that is obtained by measuring the size (diameter or major axis length) of 20 particles at random in a scanning electron microscope image.

In the lower layer of the positive electrode active material layer, which is an area of up to 10 length% in a thickness direction from a surface in contact with the current collector, the second positive electrode active material is included in an amount of 5 wt% to 30 wt%, for example, 10 wt% to 30 wt%, 15 wt% to 30 wt%, or 20 wt% to 30 wt%, based on a total of 100 wt% of the first and second positive electrode active materials. In the lower layer, the first positive electrode active material may be included in an amount of 70 wt% to 95 wt%, for example, 70 wt% to 90 wt%, 70 wt% to 85 wt%, or 70 wt% to 80 wt%, based on a total of 100 wt% of the first and second positive electrode active materials.

In the upper layer of the positive electrode active material layer, which is an area of the positive electrode active material layer extending up to 10 length% in a thickness direction from a surface opposite to the surface in contact with the current collector, the second positive electrode active material is included in an amount of 31 wt% to 60 wt%, for example, 32 wt% to 50 wt%, or 35 wt% to 45 wt%, based on a total of 100 wt% of the first and second positive electrode active materials. In the upper layer, the first positive electrode active material may be included in an amount of 40 wt% to 69 wt%, for example, 50 wt% to 68 wt%, or 55 wt% to 65 wt%, based on a total of 100 wt% of the first and second positive electrode active materials.

Therefore, compared to the lower layer, the upper layer may further include the second positive electrode active material by 1 wt% to 55 wt%, for example, 2 wt% to 50 wt%, 3 wt% to 40 wt%, 5 wt% to 30 wt%, 5 wt% to 20 wt%, or 5 wt% to 10 wt%, based on a total of 100 wt% of the first and second positive electrode active materials. For example, the content (e.g., amount) of the second positive electrode active material in the upper layer may be greater than the second positive electrode active material in the lower layer, by 1 wt% to 55 wt%, for example, 2 wt% to 50 wt%, 3 wt% to 40 wt%, 5 wt% to 30 wt%, 5 wt% to 20 wt%, or 5 wt% to 10 wt%.

If each content (e.g., amount) of the second positive electrode active material in the upper layer and the lower layer respectively satisfies the ranges, and in addition, the content (e.g., amount) of the second positive electrode active material in the upper layer is higher in a set or predetermined ratio than that of the second positive electrode active material in the lower layer, the problem that the large particles in the form of secondary particles, which is the first positive electrode active material, are broken or damaged in the upper layer in contact with the compressing roll or the compressing plate during the compression for manufacturing the positive electrode may be effectively improved, and accordingly, the problem that the large particles are deteriorated at an accelerating rate during the charge and discharge also may be suppressed or reduced, improving cycle-life characteristics and maintaining high capacity and high energy density. In addition, the impregnation of an electrolyte solution may be increased, or the movement of lithium ions may be smoothened, improving overall performance of the battery.

Between the lower and upper layers, a lower layer composition alone or an upper layer composition alone may exist, or the lower layer composition may exist close to the lower layer, while the upper layer composition may exist close to the upper layer.

For example, because the content (e.g., amount) of the second positive electrode active material with a small average particle diameter may increase from the lower layer toward the upper layer, while that of the first positive electrode active material with a large average particle diameter may increase from the upper layer toward the lower layer, the lower portion of the electrode having a large content (e.g., amount) of the first positive electrode active material with a large average particle diameter may exhibit higher porosity, higher impregnation of an electrolyte solution, and more smooth movement of lithium ions. For example, as the upper and lower portions of the electrode plate secure a substantially uniform reaction, cycle-life characteristics of the rechargeable lithium battery including the positive electrode may be improved. In addition, because the lithium ions may smoothly move to the lower portion of the electrode plate, an electrochemical reaction may more actively occur, thereby improving rate capability and/or the like of the rechargeable lithium battery.

The positive electrode active material layer may have density of 3.4 g/cc to 3.9 g/cc, for example, 3.5 g/cc to 3.8 g/cc, or 3.6 g/cc to 3.7 g/cc. The density of the positive electrode active material layer refers to density of the positive electrode in a compressed state. If the density of the positive electrode active material layer satisfies the ranges, very high energy density and high capacity may be realized. However, in order to realize such a high-density positive electrode, a process of compressing the positive electrode with high strength is desired or required, in which there may occur the problem that the large particles in the form of secondary particles of the upper layer are broken or damaged. However, according to the positive electrode design of one or more embodiments, very high density may not only be realized, but also the damage of the large particles of the upper layer may be effectively suppressed or reduced. For example, a cracked first positive electrode active material may be 0 to 30 number%, for example, 1 number% to 20 number%, or 3 number% to 10 number% based on 100 number% of the total first positive electrode active material in the upper layer. A cracked positive electrode active material may refer to a positive electrode active material where a crack occurred even in a part of a positive electrode active material particle. Whether or not the first positive electrode material is cracked and a crack occurrence rate may be measured through an SEM or TEM image on a cross-section of the positive electrode. In addition, these may be measured on the positive electrode after the compression or the formation process. If the cracked first positive electrode active material out of the total first positive electrode active material in the upper layer satisfies the ranges, the problem that the large particles are deteriorated according to the repeated charges and discharges may be effectively prevented or reduced, improving cycle-life characteristics of the battery.

If the large particles in the upper layer are damaged during the compression, nickel ions may be reduced, for example, Ni⁴⁺ ions may be reduced to Ni³⁺ ions. In one or more embodiments, because the large particle damage in the upper layer is suppressed or reduced, which decreases the nickel reduction, a portion occupied by Ni³⁺ may be, for example, 1 area% to 30 area%, for example, 3 area% to 20 area%, or 5 area% to 10 area%, based on 100 area% of a total area of the cross-section of the upper layer. This may be measured through TXM (Transmission X-ray Microscopy) analysis on the cross-section of the positive electrode after the compression or the formation process. If a ratio of Ni³⁺ satisfies the ranges in the cross-section of the upper layer, the problem that the large particles are deteriorated according to the repeated charges and discharges may be effectively prevented or reduced, improving cycle-life characteristics of the rechargeable lithium battery including the positive electrode.

In one or more embodiments, a total thickness of the positive electrode active material layer may be 40 µm to 300 µm, for example, 40 µm to 250 µm, 50 µm to 200 µm, or 60 µm to 100 µm.

In one or more embodiments, the positive electrode according to one or more embodiments includes a positive electrode current collector; a first layer located on the current collector and including 5 wt% to 30 wt% of a second positive electrode active material based on a total of 100 wt% of the first and second positive electrode active materials; and a second layer located on the first layer and including 31 wt% to 60 wt% of the second positive electrode active material, based on a total of 100 wt% of the first and second positive electrode active materials.

In the above embodiments, the first layer and the second layer may be in contact with each other, or a third layer may exist between the first layer and the second layer. For example, in the third layer, the composition of the first layer and the composition of the second layer may be mixed. According to a method of manufacturing the positive electrode, which will be described in more detail later, coating may be performed concurrently (e.g., simultaneously) so that the second layer is on the first layer using a dual slot die coater, and then, during the subsequent compression process, the first and second layers may be mixed together to form a third layer in which their compositions are mixed.

In the above embodiments, the inclusion of 5 wt% to 30 wt% of the second positive electrode active material in the first layer refers to that the second positive electrode active material, which is a small particle, is included in an amount of 5 wt% to 30 wt%, based on a total amount of the first and second positive electrode active materials included in the first layer and similarly, the inclusion of 31 wt% to 60 wt% of the second positive electrode active material in the second layer refers to that the second positive electrode active material, which is a small particle, is included in an amount of 31 wt% to 60 wt%, based on a total amount of the first and second positive electrode active materials in the second layer.

According to the above embodiments, in the lower layer of the positive electrode active material layer, which is an area of up to 10 length% in a thickness direction from a surface in contact with the current collector, the second positive electrode active material is included in an amount of 5 wt% to 30 wt%, based on a total of 100 wt% of the first and second positive electrode active materials, and in the upper layer of the positive electrode active material layer, which is an area of the positive electrode active material layer extending up to 10 length% in a thickness direction from a surface opposite to the surface in contact with the current collector, the second positive electrode active material is included in an amount of 31 wt% to 60 wt%, based on a total of 100 wt% of the first and second positive electrode active materials. The first layer may include the lower layer, and the second layer may include the upper layer.

A thickness of the first layer and a thickness of the second layer may be the same or different from each other, and may each independently be 40 µm to 270 µm, for example, 40 µm to 200 µm, 40 µm to 150 µm, 40 µm to 100 µm, or 40 µm to 80 µm.

A ratio of the thickness of the first layer and the thickness of the second layer is not particularly limited, but may be 50:50 to 90:10, for example, 50:50 to 85:15, 50:50 to 80:20, 50:50 to 75:25, or 55:45 to 70:30. By appropriately or suitably adjusting the thicknesses of the first and second layers, high capacity and high energy density can be achieved while concurrently (e.g., simultaneously) improving cycle-life characteristics.

The lithium nickel-based composite oxide of the first positive electrode active material and the lithium nickel-based composite oxide of the second positive electrode active material may be the same or different from each other, and may each independently be represented by Chemical Formula 1.

Chemical Formula 1 Liₐ₁Niₓ₁M¹y₁M²_{z1}O_{2-b1}X_{b1}

In Chemical Formula 1, 0.9≤a1≤1.2, 0.3≤x1<1, 0<y1 ≤0.7, 0≤z1≤0.7, 0.9≤ x1+y1+z1≤1.1, and 0≤b1≤0.1, M¹ and M² may each independently be one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S.

For example, in Chemical Formula 1, 0.6≤x1<1, 0<y1≤0.4, 0≤z1≤0.4, or 0.7 ≤x1<1, 0<y1≤0.3, 0≤z1≤0.3, or 0.8≤x1<1, 0<y1≤0.2, 0≤z1≤0.2, or 0.9≤x1<1, 0≤y1≤ 0.1, 0≤z1≤0.1.

As a specific example, the lithium nickel-based composite oxide of the first positive electrode active material and the lithium nickel-based composite oxide of the second positive electrode active material may each independently be represented by Chemical Formula 2. The compound represented by Chemical Formula 2 may be referred to as a lithium nickel-cobalt-aluminium-based composite oxide or a lithium nickel-cobalt-manganese-based composite oxide.

Chemical Formula 2 Liₐ₂Niₓ₂Coy₂M³_{z2}M⁴_{w2}O_{2-b2}X_{b2}

In Chemical Formula 2, 0.9≤a2≤1.2, 0.3≤x2≤0.98, 0.01≤y2≤0.69, 0.01≤z2≤ 0.69, 0≤w2≤0.69, 0.9≤x2+y2+z2+w2≤1.1, and 0≤b2≤0.1, M³ is Al, Mn, and/or a (e.g., any suitable) combination thereof, M⁴ is one or more elements selected from among B, Ba, Ca, Ce, Cr, Cu, Fe, Mg, Mo, Nb, Si, Sn, Sr, Ti, V, W, and Zr, and X is one or more elements selected from among F, P, and S.

In Chemical Formula 2, for example, 0.4≤x2≤0.98, 0.01≤y2≤0.59, 0.01≤z2≤ 0.59, and 0≤w2≤0.59; or 0.5≤x2≤0.98, 0.01≤y2≤0.49, 0.01≤z2≤0.49, and 0≤w2≤ 0.49; or 0.6≤x2≤0.98, 0.01≤y2≤0.39, 0.01≤z2≤0.39, and 0≤w2≤0.39; or 0.7≤x2≤0.98, 0.01≤y2≤0.29, 0.01≤z2≤0.29, and 0≤w2≤0.29; or 0.8≤x2≤0.98, 0.01≤y2≤0.19, 0.01≤ z2≤0.19, and 0≤w2≤0.19; or 0.9≤x2≤0.98, 0.01≤y2≤0.09, 0.01≤z2≤0.09, and 0≤w2≤ 0.09.

In each of the lithium nickel-based composite oxide of the first positive electrode active material and the lithium nickel-based composite oxide of the second positive electrode active material, each nickel content (e.g., amount) based on 100 mol% of metals excluding lithium may be, for example, greater than or equal to 60 mol%, for example, greater than or equal to 70 mol%, greater than or equal to 80 mol%, or greater than or equal to 90 mol%. The higher the nickel content (e.g., amount), the higher capacity can be achieved. However, as the nickel content (e.g., amount) is higher, the side reaction with an electrolyte may occur more, or the cation mixing may be increased, resultantly increasing the problem that the large particles are broken or deteriorated during the compression process. However, according to the positive electrode design of one or more embodiments, even if the nickel content (e.g., amount) is increased, the problem that the large particles are damaged in the upper layer during the compression process may be effectively suppressed or reduced, and the problem that the large particles are deteriorated during the charge and discharge may be prevented or reduced, improving cycle-life characteristics of the rechargeable lithium battery.

### Binder

The binder according to one or more embodiments serves to adhere the positive electrode active material particles to each other and also to adhere the positive electrode active material to the current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxidecontaining polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon, but are not limited thereto.

### Conductive Material

The conductive material according to one or more embodiments is included to provide electrode conductivity and any electrically conductive material may be used as a conductive material unless it causes a chemical change. Examples of the conductive material may include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

Based on 100 wt% of the positive electrode active material layer, the content (e.g., amount) of the positive electrode active material may be 90 wt% to 99.8 wt%, or 95 wt% to 99 wt%, and the content (e.g., amount) of the binder and the conductive material may be 0.1 wt% to 5 wt%, or 0.5 wt% to 2.5 wt%, respectively.

### Current Collector

The positive electrode current collector according to one or more embodiments is not particularly limited as long as it is conductive without causing chemical changes in the rechargeable lithium battery, but specific examples may include aluminium (Al), stainless steel (SUS), indium (In), and magnesium (Mg), titanium (Ti), iron (Fe), cobalt (Co), nickel (Ni), zinc (Zn), germanium (Ge), lithium (Li), and/or a (e.g., any suitable) combination thereof, and for example, it may include aluminium (Al). In one or more embodiments, the shape of the current collector may be plate-shaped or thin-shaped.

### Method of Manufacturing Positive Electrode

In one or more embodiments, a method of manufacturing a positive electrode for a rechargeable lithium battery includes preparing a first layer composition having a content (e.g., amount) of 5 wt% to 30 wt% of the second positive electrode active material based on a total of 100 wt% of the first and second positive electrode active materials; preparing a second layer composition having a content (e.g., amount) of 31 wt% to 60 wt% of the second positive electrode active material based on a total of 100 wt% of the first and second positive electrode active materials; loading the first layer composition and the second layer composition into a dual slot die coater, and concurrently (e.g., simultaneously) coating the first layer so that the first layer is located on the current collector and the second layer is located on the first layer; and drying and then compressing.

The aforementioned positive electrode may be manufactured through the above method. Because the details of the first and second positive electrode active materials may each independently be the same as described above, detailed descriptions may not be provided.

The first layer composition includes the first positive electrode active material and the second positive electrode active material in a set or predetermined ratio and optionally, a binder and/or a conductive material. Likewise, the second layer composition incudes the first positive electrode active material and the second positive electrode active material in a set or predetermined ratio and optionally, a binder and/or a conductive material.

The first layer composition includes the second positive electrode active material in an amount of 5 wt% to 30 wt%, for example, 10 wt% to 30 wt%, 15 wt% to 30 wt%, or 20 wt% to 30 wt%, based on 100 wt% of the first and second positive electrode active materials in total. The second layer composition includes the second positive electrode active material in an amount of 31 wt% to 60 wt%, for example, 32 wt% to 50 wt%, or 35 wt% to 45 wt%, based on 100 wt% of the first and second positive electrode active materials in total. In this way, if the ratio of the small particles in the form of single particles in each of a first layer, which is the lower layer, and a second layer, which is the upper layer, is adjusted, the problem that the large particles in the form of secondary particles are damaged in the upper layer in contact with the compressing roll during the compression step (e.g., act or task) may be effectively improved.

The first layer and the second layer may be, for example, designed to have a thickness ratio of 50:50 to 90:10 and specifically, 50:50 to 85:15, 50:50 to 80:20, 50:50 to 75:25, or 55:45 to 70:30. If the thickness ratio of the first layer and the second layer is appropriately or suitably adjusted, high capacity and high energy density may not only be realized, but also cycle-life characteristics may be improved at the same time.

The compression step (e.g., act or task) may be to compress the positive electrode to have final density of 3.4 g/cc to 3.9 g/cc, for example, 3.5 g/cc to 3.8 g/cc, or 3.6 g/cc to 3.7 g/cc. Such a compression with high strength may realize a battery with high energy density. However, there may be the problem that the large particles in the form of secondary particles in the upper layer may be broken, but according to one or more embodiments, the composition of the first and second layers may be appropriately or suitably adjusted to effectively suppress or reduce the damage on the large particles in the upper layer, thereby, realizing high energy density and improving cycle-life characteristics at the same time.

### Rechargeable Lithium Battery

In one or more embodiments, the rechargeable lithium battery includes the positive electrode; a negative electrode; and an electrolyte. Herein, the electrolyte may be a liquid electrolyte or a solid electrolyte.

For example, in one or more embodiments, a rechargeable lithium battery includes the aforementioned positive electrode, a negative electrode, a separator between the positive electrode and the negative electrode, and an electrolyte solution. As another example, an all-solid-state rechargeable battery includes the aforementioned positive electrode, a negative electrode, and a solid electrolyte layer between the positive electrode and the negative electrode.

Hereinafter, a rechargeable lithium battery using an electrolyte solution will be described in more detail as an example.

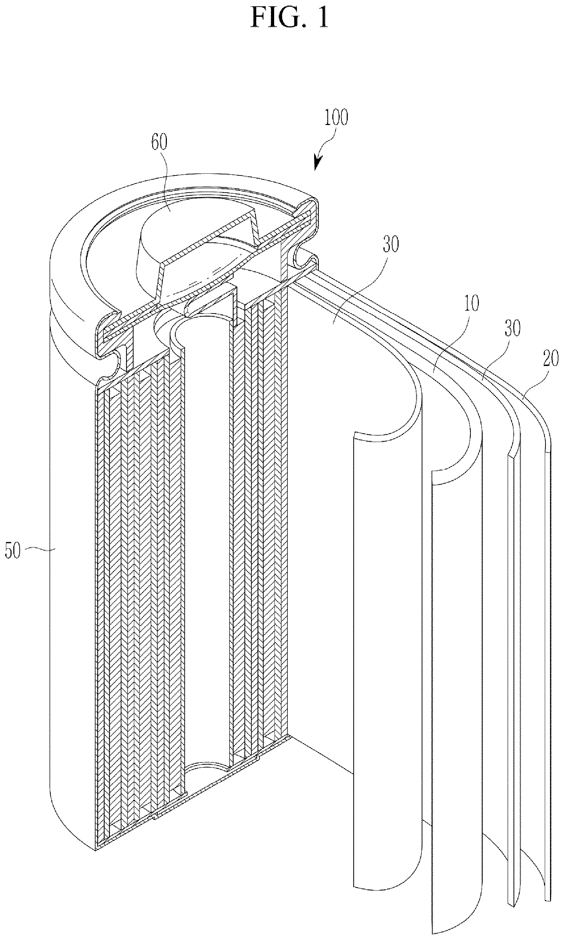

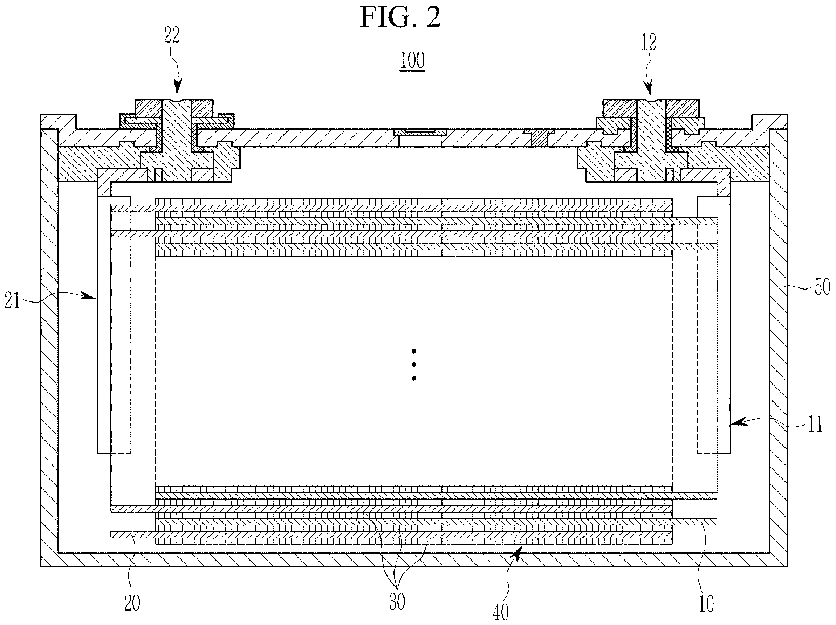

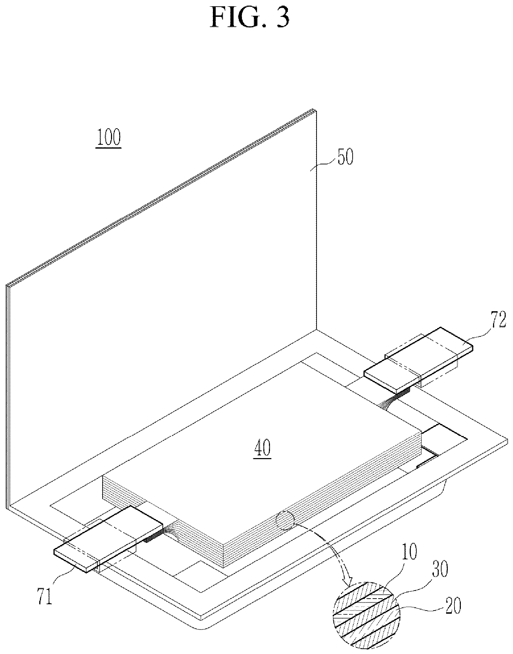

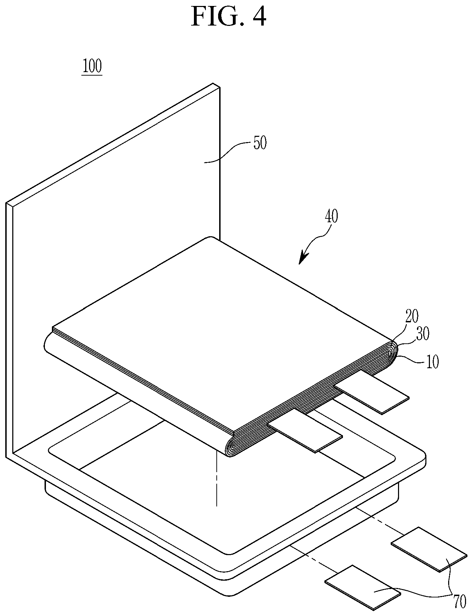

The rechargeable lithium battery may be classified into cylindrical, prismatic, pouch, coin, and/or the like depending on the shape. FIGS. 1 to 4 are schematic diagrams showing the rechargeable lithium battery according to one or more embodiments, where FIG. 1 is a cylindrical battery, FIG. 2 is a prismatic battery, and FIGS. 3 and 4 are a pouch-shaped battery. Referring to FIGS. 1 to 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to the outside.

### Negative Electrode

The negative electrode for a rechargeable lithium battery includes a negative electrode current collector and a negative electrode active material layer on the negative electrode current collector. The negative electrode active material layer includes a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example, crystalline carbon, amorphous carbon, and/or a (e.g., any suitable) combination thereof as a carbon-based negative electrode active material. The crystalline carbon may be irregular, or sheet, flake, spherical, or fiber shaped (e.g., in a form of fibers) natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x ≤ 2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof), and/or a (e.g., any suitable) combination thereof. The Sn-based negative electrode active material may be Sn, SnOₓ (0 < x ≤ 2) (e.g., SnO₂), a Sn-based alloy, and/or a (e.g., any suitable) combination thereof.

The silicon-carbon composite may be a composite of silicon and amorphous carbon. According to one or more embodiments, the silicon-carbon composite may include (e.g., be in the form of) silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material or Sn-based negative electrode active material may be mixed with the carbon-based negative electrode active material.

For example, the negative electrode active material layer may include 90 wt% to 99 wt% of the negative electrode active material, 0.5 wt% to 5 wt% of the binder, and 0 wt% to 5 wt% of the conductive material.

The binder serves to well adhere the negative electrode active material particles to each other and also to adhere the negative electrode active material to the current collector. The binder may be a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and/or a (e.g., any suitable) combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber, and may be, for example, polytetrafluoroethylene, polyvinylidene fluoride, a polyvinylidene fluoride-hexafluoropropylene copolymer, polyethylene oxide, and/or a (e.g., any suitable) combination thereof.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, a carbon nanofiber, a carbon nanotube, and/or the like; a metal-based material of a metal powder or a metal fiber including copper, nickel, aluminium, silver, and/or the like; a conductive polymer such as a polyphenylene derivative; and/or a (e.g., any suitable) mixture thereof.

The negative electrode current collector may be selected from among a copper foil, a nickel foil, a stainless steel foil, a titanium foil, a nickel foam, a copper foam, a polymer substrate coated with a conductive metal, and/or a (e.g., any suitable) combination thereof.

### Electrolyte Solution

The electrolyte solution for a rechargeable lithium battery includes a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (kinds).

When using a carbonate-based solvent, a cyclic carbonate and a chain carbonate may be mixed and used, and the cyclic carbonate and the chain carbonate may be mixed in a volume ratio of 1:1 to 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, and/or a (e.g., any suitable) combination thereof on a surface (e.g., one or both surfaces (e.g., opposite surfaces or opposite sides)) of the porous substrate.

The porous substrate may be a polymer film formed of any one polymer selected from among polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or mixture of two or more thereof.

The organic material may include a polyvinylidene fluoride-based polymer or a (meth)acrylic-based polymer.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

Examples and comparative examples of the present disclosure are described in more detail herein. However, the following examples are only examples of the present disclosure, and the present disclosure is not limited to the following examples.

### Example 1

### (1) Manufacturing of Positive Electrode

Li₁Ni_{0.916}Co_{0.07}Al_{0.014}O₂ was used as a positive electrode active material, which was prepared by mixing a first positive electrode active material in the form of secondary particles with a particle diameter of 17 µm and a second positive electrode active material in the form of single particles with a particle diameter of 3 µm in a weight ratio of 70:30. 97.7 wt% of the prepared positive electrode active material, 1.2 wt% of a binder PVDF, and 1.1 wt% of a conductive material CNT were mixed in an NMP solvent to prepare a first layer composition.

In contrast, Li₁Ni_{0.916}Co_{0.07}Al_{0.014}O₂ was used as a positive electrode active material, which was prepared by mixing a first positive electrode active material in the form of secondary particles with a particle diameter of 17 µm and a second positive electrode active material in the form of single particles with a particle diameter of 3 µm in a weight ratio of 60:40. 97.7 wt% of the prepared positive electrode active material, 1.2 wt% of a binder PVDF, and 1.1 wt% of a conductive material CNT were mixed in an NMP solvent to prepare a second layer composition.

The prepared first and second layer compositions were respectively loaded in a dual slot die coater to concurrently (e.g., simultaneously) dispose a first layer on an aluminium current collector and a second layer on the first layer. The coating layers were dried and compressed to have electrode plate density of 3.7 g/cc, obtaining a positive electrode in which the current collector, the first layer, and the second layer were sequentially stacked. In the obtained positive electrode, a total thickness of the positive electrode active material layer was about 100 µm, and the first layer had a thickness which was 60% of a total thickness, while the second layer had a thickness which was 40% of the total thickness.

### (2) Manufacturing of Negative Electrode

97.3 wt% of graphite as a negative electrode active material, 0.5 wt% of denka black, 0.9 wt% of carboxymethyl cellulose, and 1.3 wt% of a styrenebutadiene rubber were mixed in an aqueous solvent to prepare negative electrode active material slurry. The prepared negative electrode active material slurry was coated on a copper foil, dried, and compressed to manufacture a negative electrode.

### (3) Manufacturing of Battery Cell

The manufactured positive electrode, a separator with a polyethylene/polypropylene multi-layer structure, and the manufactured negative electrode were sequentially stacked to manufacture a pouch-type or kind cell, and an electrolyte solution prepared by adding 1.0 M of LiPF₆ lithium salt in a solvent of ethylene carbonate and diethyl carbonate mixed in a volume ratio of 50:50 was injected thereinto to manufacture a rechargeable lithium battery cell.

### Comparative Example 1

A rechargeable lithium battery cell was manufactured substantially in the same manner as in Example 1 except that the positive electrode was manufactured by using the first layer composition alone without using the second layer composition with a general coater to form the first layer with a total thickness of 100 µm on the current collector.

### Comparative Example 2

A rechargeable lithium battery cell was manufactured in substantially the same manner as in Example 1 except that the first layer composition was prepared to include a positive electrode active material prepared by mixing the first positive electrode active material and the second positive electrode active material in a weight ratio of 60:40 instead of 70:30, and the second layer composition was prepared to include a positive electrode active material prepared by mixing the first positive electrode active material and the second positive electrode active material in a weight ratio of 70:30 instead of 60:40.

### Comparative Example 3

A rechargeable lithium battery cell was manufactured in substantially the same manner as in Example 1 except that the first layer composition was prepared to include a positive electrode active material prepared by mixing the first positive electrode active material and the second positive electrode active material in a weight ratio of 60:40 instead of 70:30.

### Evaluation Example 1: Analysis of Deterioration of Upper Layer due to Compression

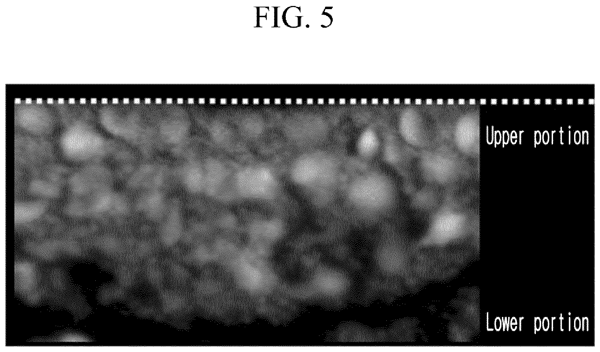

TXM (Transmission X-ray Microscopy) analysis was performed on a cross-section of each of the compressed positive electrodes of Example 1 and Comparative Examples 1 to 3. FIG. 5 is an image showing the positive electrode cross-section of Comparative Example 1, wherein there were many areas corresponding to Ni³⁺ in the upper portion, which reflects nickel reduction and shows that the positive electrode active material was broken or damaged. The left of FIG. 6 is an image enlarging an upper portion of the positive electrode cross-section of Comparative Example 1, and the right of FIG. 6 is an image enlarging an upper portion of the positive electrode cross-section of Example 1. Referring to FIG. 6, Comparative Example 1 exhibited that many areas corresponding to Ni³⁺ appeared in the large particles, which confirmed that large particles in the form of secondary particles were broken or damaged, but Example 1 exhibited that areas corresponding to Ni³⁺ were reduced in the large particles of the upper portion, which confirmed that breaking phenomenon caused by the compression was reduced.

### Evaluation Example 2: Evaluation of Cycle-life Characteristics of Battery Cells

The rechargeable lithium battery cells of Example 1 and Comparative Examples 1 to 3 were constant current-charged to a voltage of 4.25 V at a rate of 1.0 C and cut off at a rate of 0.05 C, while maintaining 4.25 V in a constant voltage mode, at 45 °C. Subsequently, the cells were discharged to a voltage of 2.8 V at a rate of 1.0 C, and this charge and discharge cycle was 1000 times repeated. In all the charge and discharge cycles, a 10 minute pause was set after each charge and discharge cycle, and capacity changes according to cycles are shown in Table 1.

**Table 1**

| | Capacity retention rate after 1000 cycles at 45 °C |
|---|---|
| Example 1 | 92.7% |
| Comparative Example 1 | 86.6% |
| Comparative Example 2 | 81.6% |
| Comparative Example 3 | 84.2% |

Referring to Table 1, Example 1, compared to Comparative Examples 1 to 3, exhibited significantly excellent or suitable cycle-life characteristics of the cells.

A battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this invention has been described in connection with what is presently considered to be practical example embodiments, it is to be understood that the present disclosure is not limited to the disclosed embodiments. In contrast, it is intended to cover one or more suitable modifications and equivalent arrangements included within the scope of the appended claims and equivalents thereof.

**Reference Numerals**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode for a rechargeable lithium battery, comprising
a positive electrode current collector and a positive electrode active material layer on the positive electrode current collector,
wherein the positive electrode active material layer comprises a first positive electrode active material and a second positive electrode active material,
the first positive electrode active material comprises lithium nickel-based composite oxide and comprises secondary particles comprising a plurality of primary particles, and an average particle diameter (D₅₀) of the secondary particles is 9 µm to 25 µm,
the second positive electrode active material comprises lithium nickel-based composite oxide and comprises single particles, and an average particle diameter (D₅₀) of the single particles is 0.5 µm to 5 µm,
in the positive electrode active material layer,
a lower layer, which is an area of up to 10 length% in a thickness direction from a surface in contact with the current collector based on 100 length% of the total thickness of the positive electrode active material layer, comprises 5 wt% to 30 wt% of the second positive electrode active material, based on a total of 100 wt% of the first and second positive electrode active materials, and
an upper layer, which is an area of the positive electrode active material layer extending up to 10 length% in a thickness direction from a surface opposite to the surface in contact with the current collector based on 100 length% of the total thickness of the positive electrode active material layer, comprises 31 wt% to 60 wt% of the second positive electrode active material based on a total of 100 wt% of the first and second positive electrode active materials.

2. The positive electrode for a rechargeable lithium battery as claimed in claim 1, wherein
the lower layer comprises 20 wt% to 30 wt% of the second positive electrode active material, based on a total of 100 wt% of the first and second positive electrode active materials.

3. The positive electrode for a rechargeable lithium battery as claimed in claim 1 or claim 2, wherein
the upper layer comprises 35 wt% to 45 wt% of the second positive electrode active material, based on a total of 100 wt% of the first and second positive electrode active materials.

4. The positive electrode for a rechargeable lithium battery as claimed in any one of claims 1 to 3, wherein
a content of the second positive electrode active material in the upper layer is 1 wt% to 55 wt% greater than the content of second positive electrode active material in the lower layer.

5. The positive electrode for a rechargeable lithium battery as claimed in any one of claims 1 to 4, wherein
a content of the second positive electrode active material increases from the lower layer to the upper layer.

6. The positive electrode for a rechargeable lithium battery as claimed in any one of claims 1 to 5, wherein
the positive electrode active material layer has a density of 3.4 g/cc to 3.9 g/cc.

7. The positive electrode for a rechargeable lithium battery as claimed in any one of claims 1 to 6, wherein
the first positive electrode active material with cracks is 0 number% to 30 number%, based on 100 number% of the first positive electrode active material in the upper layer.

8. The positive electrode for a rechargeable lithium battery as claimed in any one of claims 1 to 7, wherein
a portion occupied by Ni³⁺ is 1 area% to 30 area%, based on a total area of 100 area% of the cross-section of the upper layer.

9. The positive electrode for a rechargeable lithium battery as claimed in any one of claims 1 to 8, wherein
the positive electrode active material layer has a thickness of 40 µm to 300 µm.

10. The positive electrode for a rechargeable lithium battery as claimed in claim 1, wherein
the positive electrode for a rechargeable lithium battery comprises:
a positive electrode current collector;
a first layer located on the positive electrode current collector and comprising 5 wt% to 30 wt% of a second positive electrode active material, based on a total of 100 wt% of the first and second positive electrode active materials; and
a second layer located on the first layer and comprising 31 wt% to 60 wt% of a second positive electrode active material, based on a total of 100 wt% of the first and second positive electrode active materials, and
the lower layer is included in a first layer, and the upper layer is included in a second layer, optionally wherein
the first and second layers are adjacent to each other, or
a third layer is between the first layer and the second layer, in which the composition of the first layer and the composition of the second layer are mixed.

11. The positive electrode for a rechargeable lithium battery as claimed in claim 9 or claim 10, wherein
a thickness of the first layer and a thickness of the second layer are the same or different from each other and are each independently 40 µm to 270 µm, and
a ratio of the thickness of the first layer to the thickness of the second layer is 50:50 to 90:10.

12. The positive electrode for a rechargeable lithium battery as claimed in any one of claims 1 to 11, wherein
the lithium nickel-based composite oxide of the first positive electrode active material and the lithium nickel-based composite oxide of the second positive electrode active material are the same or different from each other, and are each independently represented by Chemical Formula 1:
Chemical Formula 1 Liₐ₁Niₓ₁M¹_{y1}M²_{z1}O_{2-b1}X_{b1}
wherein in Chemical Formula 1, 0.9≤a1≤1.2, 0.3≤x1<1, 0<y1≤0.7, 0≤z1≤0.7, 0.9≤x1+y1+z1≤1.1, and 0≤b1≤0.1, M¹ and M² are each independently one or more elements selected from among Al, B, Ba, Ca, Ce, Co, Cr, Cu, Fe, Mg, Mn, Mo, Nb, Si, Sn, Sr, Ti, V, W, and Zr, and X is one or more elements selected from among F, P, and S.

13. The positive electrode for a rechargeable lithium battery as claimed in any one of claims 1 to 12, wherein
the lithium nickel-based composite oxide of the first positive electrode active material and the lithium nickel-based composite oxide of the second positive electrode active material are each independently represented by Chemical Formula 2:
Chemical Formula 2 Liₐ₂Niₓ₂Coy₂M³_{z2}M⁴_{w2}O_{2-b2}X_{b2}
wherein in Chemical Formula 2, 0.9≤a2≤1.2, 0.3≤x2≤0.98, 0.01≤y2≤0.69, 0.01 ≤z2≤0.69, 0≤w2≤0.69, 0.9≤x2+y2+z2+w2≤1.1, and 0≤b2≤0.1, M³ is Al, Mn, or a combination thereof, M⁴ is one or more elements selected from among B, Ba, Ca, Ce, Cr, Cu, Fe, Mg, Mo, Nb, Si, Sn, Sr, Ti, V, W, and Zr, and X is one or more elements selected from among F, P, and S.

14. A method of manufacturing a positive electrode for a rechargeable lithium battery, the method comprising
preparing a first layer composition having a content of 5 wt% to 30 wt% of a second positive electrode active material, based on a total of 100 wt% of a first positive electrode active material and the second positive electrode active material;
preparing a second layer composition having a content of 31 wt% to 60 wt% of the second positive electrode active material, based on a total of 100 wt% of the first and second positive electrode active material;
loading the first layer composition and the second layer composition into a dual slot die coater, and concurrently coating so that the first layer is located on the current collector and the second layer is located on the first layer; and
drying and then compressing,
wherein the first positive electrode active material comprises a lithium nickel-based composite oxide and comprises secondary particles composed of a plurality of primary particles, and an average particle diameter (D₅₀) of the secondary particles is 9 µm to 25 µm, and the second positive electrode active material comprises a lithium nickel-based composite oxide and comprises single particle, and an average particle diameter (D₅₀) of the single particles is 0.5 µm to 5 µm.

15. A rechargeable lithium battery comprising
the positive electrode as claimed in any one of claims 1 to 14;
a negative electrode; and
an electrolyte.
